# EUROPÄISCHE PATENTSCHRIFT

(11) **EP 3 094 886 B1**
(45) Veröffentlichungstag und Bekanntmachung des Hinweises auf die Patenterteilung: **11.03.2020**
(21) Anmeldenummer: 14818871.7
(22) Anmeldetag: 10.12.2014
(51) Int. Cl.: F16H 48/38, F16H 48/40

(54) **DIFFERENZIALGETRIEBE**
DIFFERENTIAL GEAR
DIFFÉRENTIEL

(30) Priorität: 16.01.2014 DE 102014000430
(43) Veröffentlichungstag der Anmeldung: 23.11.2016
(73) Patentinhaber: Audi AG, 85045 Ingolstadt (DE)
(72) Erfinder: HORNUNG, Kurt, 91227 Leinburg (DE)
(74) Vertreter: Lehle, Josef
(86) Internationale Anmeldenummer: PCT/EP2014/003300
(87) Internationale Veröffentlichungsnummer: WO 2015/106787

(56) Entgegenhaltungen:
- WO-A1-2011/026454
- DE-A1- 10 304 080
- GB-A- 2 253 662
- US-A1- 2002 042 321
- US-A1- 2004 162 179

## Beschreibung

Die vorliegende Erfindung betrifft ein Differenzialgetriebe, insbesondere für ein Kraftfahrzeug, gemäß dem Oberbegriff des Patentanspruchs 1.

Aus der EP 1 555 460 A1 ist ein Differenzialgetriebe üblicher Bauart bekannt. In dem Differenzialgetriebe verläuft das Antriebsmoment von dem über ein Ritzel angetriebenen Zahnrad auf das Ausgleichsgehäuse und von diesem über den Mitnehmerbolzen und die Planetenräder auf die auf den Abtriebshalbwellen aufgesteckten Abtriebsräder. Dies bedingt ein entsprechend steifes Ausgleichsgehäuse, zumeist eine Gusskonstruktion. Im Ausgleichsgehäuse sind in der Regel größere Fenster vorzusehen, durch die hindurch die Planetenräder und die Abtriebsräder zu montieren sind. Auch die Befestigung des angetriebenen Zahnrads, gegebenenfalls eines Tellerrads, ist entsprechend aufwendig und drehsteif auszubilden (zum Beispiel durch Schweiß- oder Schraubverbindungen).

Aus der GB 2 253 662 A ist ein Differenzialgetriebe mit einem ringförmigen Zahnrad bekannt, wobei das Zahnrad von einem Ritzel angetrieben wird und auf einem Ausgleichsgehäuse mittels einer Schraubverbindung angeordnet ist. In dem Ausgleichsgehäuse ist ein Mitnehmerbolzen vorgesehen, auf dem Planetenräder gelagert sind.

Auch die US 2002/042321 A1 beschreibt ein Differenzialgetriebe mit einem Zahnrad, das durch Schraubverbindungen an einem Ausgleichsgehäuse angeflanscht ist. Ferner ist ein Mitnehmerbolzen vorgesehen, der bewegungsfest gegenüber dem Ausgleichsgehäuse fixiert ist.

Aus der DE 103 04 050 A1 ist ein Differentialgetriebe bekannt, mit einem Zahnrad, das auf das Ausgleichsgehäuse ohne Formschluss in Umfangsrichtung aufgesteckt ist.

Die Aufgabe der Erfindung besteht darin, ein Differenzialgetriebe der gattungsgemäßen Art bereitzustellen, das baulich einfacher, gewichtsgünstiger und montageleichter ausgebildet ist.

Die Aufgabe ist durch die Merkmale des Patentanspruchs 1 gelöst. Vorteilhafte Weiterbildungen und Ausgestaltungen der Erfindung sind in den Unteransprüchen offenbart.

Erfindungsgemäß wird vorgeschlagen, dass das über ein Antriebsritzel angetriebene, ringförmige Zahnrad auf das Ausgleichsgehäuse ohne Formschluss in Umfangsrichtung aufgesteckt ist und Ausnehmungen aufweist, in die der zumindest eine Mitnehmerbolzen in Umfangsrichtung formschlüssig einragt. Durch diese Maßnahme wird das Ausgleichsgehäuse von den Antriebsmomenten entlastet bzw. dient nur zu Bauteilführungen, während das Antriebsmoment unmittelbar vom Zahnrad auf den zumindest einen Mitnehmerbolzen, usw. verläuft. Daraus resultierend können das Ausgleichsgehäuse und die Anordnung des Zahnrads auf dem Ausgleichsgehäuse wesentlich vereinfacht und gewichtsgünstiger gestaltet werden.

Das Zahnrad kann dabei baulich einfach und montagegünstig mittels eines Sicherungsrings auf dem Außenumfang des Ausgleichsgehäuses axial gehalten sein.

Des Weiteren kann das Ausgleichsgehäuse kosten- und gewichtsgünstig als dünnwandiges Bauteil aus Stahl oder Leichtmetall hergestellt sein.

Erfindungsgemäß ist das Ausgleichsgehäuse zweiteilig mit einem tassenförmigen Abschnitt und einem Deckel ausgebildet, wobei in besonders vorteilhafter Weise in dem tassenförmigen Abschnitt zum Deckel offene Schlitze zur Aufnahme des zumindest einem Mitnehmerbolzens eingearbeitet sind. Daraus resultiert eine besonders einfache, gegebenenfalls automatisiert durchführbare Montage der Innenbauteile des Ausgleichsgehäuses bzw. des Mitnehmerbolzens mit den Planetenrädern und den Abtriebsrädern. Größere Fenster im Ausgleichsgehäuse sind nicht erforderlich.

Ferner sind erfindungsgemäß der tassenförmige Abschnitt und der Deckel des Ausgleichsgehäuses in axialer und radialer Richtung ohne Befestigungsmittel durch die beidseitigen Wälzlager gehalten. Zudem kann der Deckel eine radial außenliegende Ringnut aufweisen, in die stirnseitig die Umfangswand des tassenförmigen Abschnitts zur Erzielung eines biegesteifen Verbunds einragt.

Bei hohen Antriebsleistungen auf das Differenzialgetriebe kann in das Ausgleichsgehäuse ein kreuzförmiger Mitnehmer über vier zum Deckel offene Schlitze eingesetzt sein, der vier mit den Abtriebsrädern kämmende Planetenräder trägt und der in korrespondierende vier Ausnehmungen des Zahnrads einragt.

Die Planetenräder des Differenzialgetriebes können in an sich bekannter Weise Kegelräder sein, die mit kegelförmig ausgeführten Abtriebsrädern kämmen oder es können besonders bevorzugt die Abtriebsräder auf den Abtriebhalbwellen als Kronenräder ausgeführt sein, die mit einfachen Stirnzahnrädern als Planetenräder kämmen. Letztere Ausführung hat insbesondere fertigungstechnische Vorteile und benötigt in axialer Richtung weniger Bauraum.

Erfindungsgemäß ist das Zahnrad mit einem ringförmigen Fortsatz unmittelbar an einem der beidseitigen Wälzlager gegenüber dem Getriebegehäuse abgestützt, woraus eine robuste, biegesteife und präzise Zahneingriffe sichernde Lagerung des Zahnrads resultiert. Insbesondere wenn das Zahnrad ein mit einem kegelförmigen Antriebsritzel zusammenwirkendes Tellerrad ist, wobei der ringförmige Fortsatz auf der der Verzahnung des Tellerrads gegenüberliegenden Seite vorgesehen ist, kann damit eine hinsichtlich der Fertigungstoleranzen günstige, laufruhige Lagerung des Tellerrads erzielt werden.

Schließlich kann eine im Getriebewirkungsgrad günstige Lagerung des Differenzialgetriebes im Getriebegehäuse dadurch erzielt werden, dass die beidseitigen Wälzlager Schrägschulter-Kugellager sind, die bevorzugt in O-Anordnung ausgerichtet sind.

Die Erfindung betrifft somit ein Differenzial mit zum Beispiel aufgepresstem Tellerrad. Das Differenzial kann direkt über ein Kugellager, etwa ein Schrägkugellager, im Getriebegehäuse gelagert sein. Zudem kann das Differenzialgehäuse zweiteilig ausgeführt sein und wahlweise die Kombination aus Kegelrad und Ausgleichskegel oder die Kombination aus Kronenrad und Planetenrad aufweisen. Ein zusätzlicher konstruktiver Vorteil besteht in der direkten Drehmomenteinleitung auf den Mitnehmerbolzen. Das Ausgleichsgehäuse bleibt somit von einer Momentenbelastung verschont. Durch die direkte Momenteinleitung kann das Ausgleichsgehäuse aufgrund der geringeren Belastung gewichtsreduziert gestaltet sein. Vorteilhaft muss daher das Tellerrad nicht mehr verschweißt oder verschraubt werden. Zudem kann die Einstellung des Differenzials ohne Einstellscheiben erfolgen und ist das Tellerrad direkt auf Wälzlager gelagert. Ferner ergibt sich eine geringe Lagervorspannkraft bei niedrigen Temperaturen und dadurch ein optimierter Wirkungsgrad. Die Momenteneinleitung erfolgt über einen Lastpfad, der sich vom Tellerrad über den Bolzen zu den Ausgleichsrädern erstreckt.

Zwei Ausführungsbeispiele der Erfindung sind im Folgenden mit weiteren Einzelheiten näher erläutert. Die schematische Zeichnung zeigt in:
- Fig. 1: in einem Längsschnitt ein Differenzialgetriebe für ein Kraftfahrzeug mit einem angetriebenen Tellerrad, das unmittelbar über einen Mitnehmerbolzen und Planetenräder auf Abtriebszahnräder von Abtriebshalbwellen abtreibt und mit einem Ausgleichsgehäuse, das über Schrägschulter-Kugellager im Getriebegehäuse drehbar gelagert ist;
- Fig. 2: einen Querschnitt gemäß Linie II - II der Fig. 1 durch das Differenzialgetriebe;
- Fig. 3: in raumbildlicher Darstellung das Ausgleichsgehäuse mit Deckel des Differenzialgetriebes nach den Fig. 1 und 2; und
- Fig. 4: ein zu den vorstehenden Figuren alternatives Differenzialgetriebe, bei dem die Planetenräder und die Abtriebsräder als Kegelräder ausgebildet sind.

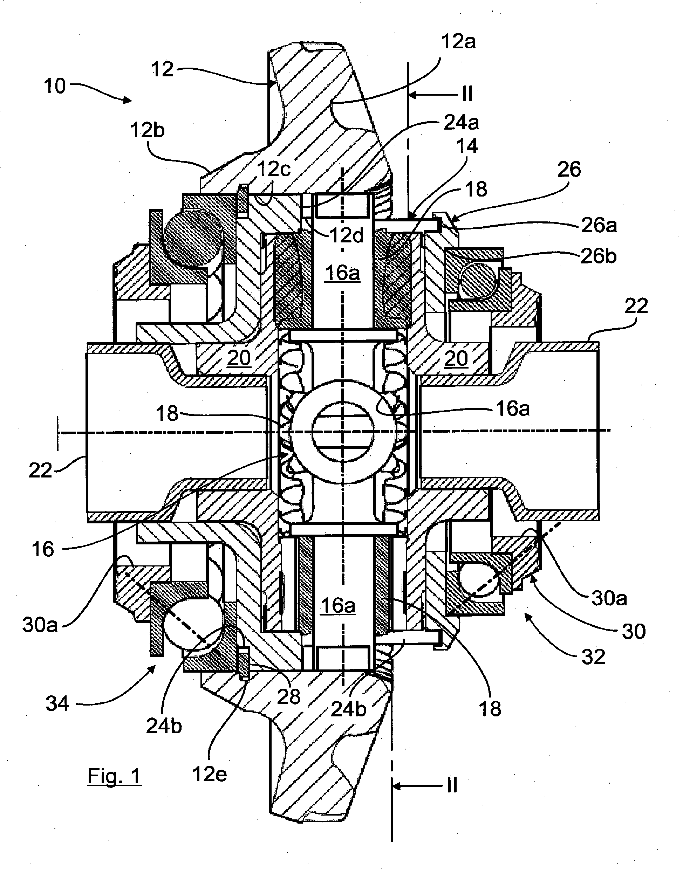

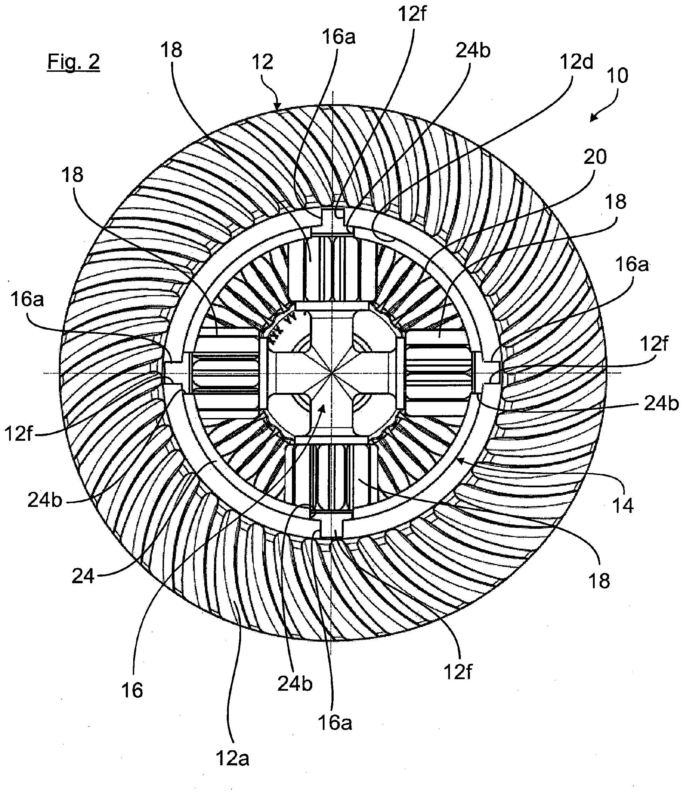

In den Fig. 1 und 2 ist ein als Achsgetriebe zum Antrieb von Rädern eines Kraftfahrzeugs ausgebildetes Differenzialgetriebe 10 dargestellt, das als Eingangselement ein von einem Ritzel (nicht ersichtlich) angetriebenes, ringförmiges Zahnrad bzw. hier ein Tellerrad 12 aufweist.

Das Tellerrad 12 ist auf einem Ausgleichsgehäuse 14 angeordnet und treibt in noch zu beschreibender Weise über einen kreuzförmigen Mitnehmerbolzen 16 und vier Planetenräder 18 die zentralen Abtriebsräder 20 bzw. die über Steckverbindungen mit diesen verbundenen Achshalbwellen 22 als Ausgangselemente des Differenzialgetriebes 10 an.

Das ringförmige Tellerrad 12 weist einerseits eine Hypoidverzahnung 12a auf, mit der es mit dem antreibenden Ritzel in Eingriff ist, und weist andererseits einen dessen Breite bzw. Nabe vergrößernden, axialen Fortsatz 12b auf.

Ferner ist der Innenumfang des Tellerrads 12 (Fig. 1) gestuft ausgeführt, mit einem Abschnitt 12c größeren Durchmessers und einen Abschnitt 12d kleineren Durchmessers.

Das Tellerrad 12 ist auf das Ausgleichsgehäuse 14 ohne Formschluss in Umfangsrichtung zum Beispiel mit Schiebesitz oder einem geringfügigen Presssitz aufgesteckt.

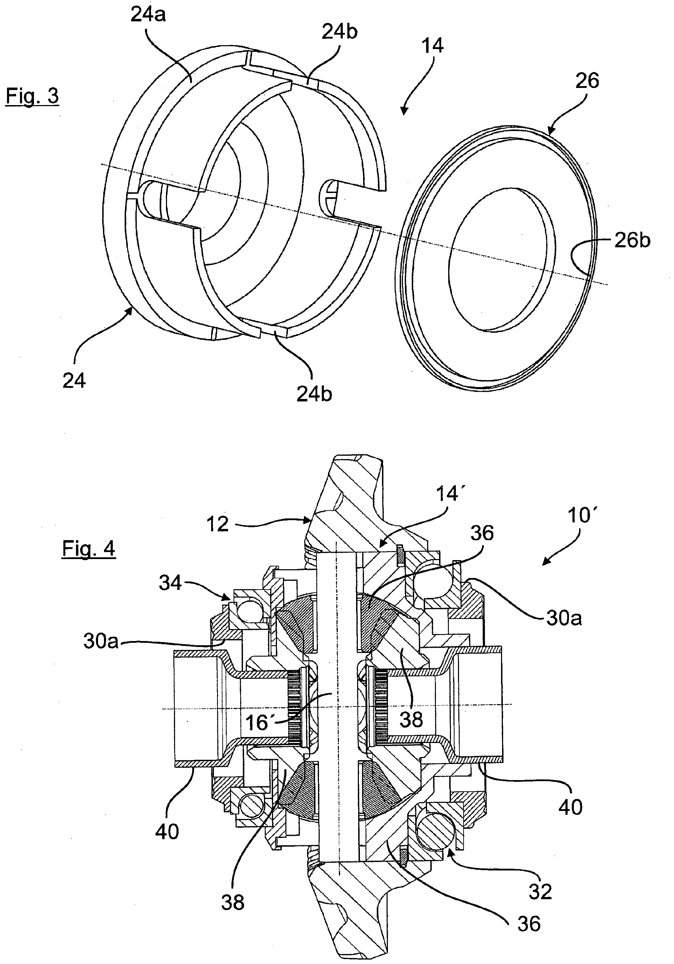

Dazu weist das relativ dünnwandig ausgeführte, rotationssymmetrische Ausgleichsgehäuse 14 (Fig. 3) aus Stahl oder Leichtmetall einen tassenförmigen Abschnitt 24 und einen scheibenförmigen Deckel 26 auf, wobei das Tellerrad 12 den ebenfalls gestuft ausgebildeten Außenumfang des Abschnitts 24 umschließt.

Das Tellerrad 12 ist dabei zwischen der so gebildeten Ringschulter 24a (Fig. 1) des Abschnitts 24 des Ausgleichsgehäuses 14 und einem in eine offene Ringnut 24b des Abschnitts 24 und eine korrespondierende Ringnut 12e am Innenumfang 12c des Tellerrads 12 axial auf dem Ausgleichsgehäuse 14 gehalten.

In dem Ausgleichsgehäuse 14 bzw. dessen Abschnitt 24 (Fig. 2) sind vier schlitzförmige zum Deckel 26 hin offene Ausnehmungen 24b vorgesehen, in die die vier Lagerzapfen 16a des kreuzförmigen Mitnehmerbolzens 16 eingesetzt werden können.

In der Fig. 1 ist der Zusammenbauzustand gezeigt, bei dem der Deckel 26 auf dem Abschnitt 24 des Ausgleichsgehäuses 14 gesetzt ist. Demzufolge umfasst der Deckel 26 mit einer radial äußeren Ringnut 26a (Fig. 1) die Umfangswand des Abschnitts 24 stirnseitig. Mit dem Aufsetzen des Deckels 26 sind die Planetenräder 18 mit dem Mitnehmerbolzen 16 und die Abtriebsräder 20 zwischen den beiden Stirnwänden des Ausgleichsgehäuses 14 und innerhalb der Umfangswand des Abschnitts 24 in axialer und radialer Richtung präzise geführt.

Die Abtriebsräder 20 sind, wie aus Fig. 1 ersichtlich ist, als Kronenräder mit radial ausgerichteter Verzahnung ausgeführt und kämmen mit den vier Planetenrädern 18, die als einfache Stirnzahnräder hergestellt sind.

Zur Montage der Bauteile wird zunächst das eine Abtriebsrad 20, anschließend der kreuzförmige Mitnehmerbolzen 16 mit auf dessen Lagerzapfen 16a aufgesteckten Planetenrädern 18 und schließlich das dem Deckel 26 benachbarte Abtriebsrad 20 in den Abschnitt 24 eingefügt und sodann der Deckel 26 aufgesteckt.

Die die Planetenräder 18 in axialer Richtung überragenden Lagerzapfen 16a (Fig. 1 und 2) greifen dabei in die Ausnehmungen 24b des im Durchmesser kleineren Abschnitts 24 des Ausgleichsgehäuses 14 ein und durchragen diese, wobei sie in weitere, korrespondierende vier Ausnehmungen 12f im Tellerrad 12 spielfrei eingreifen. Die Ausnehmungen 12f sind dabei als achsparallele Nuten ausgeführt. Zur problemlosen Übertragung der Antriebsmomente vom Tellerrad 12 direkt auf den Mitnehmerbolzen 16 können die das Ausgleichsgehäuse 14 überragenden Abschnitte der Lagerzapfen 16a Schlüsselflächen aufweisen bzw. abgeflacht ausgeführt sein (in Fig. 2 angedeutet).

Damit treibt das Tellerrad 12 unmittelbar über den Mitnehmerbolzen 16 die Planetenräder 18 und die Abriebsräder 20 bzw. die Achshalbwellen 22 an, während das Ausgleichsgehäuse 14 nur Bauteilführungen bildet.

Die Lagerung des Differenzialgetriebes 10 in dem Getriebegehäuse 30 (nur angedeutet) an entsprechenden, ringförmigen Lageraufnahmen 30a (Fig. 1) erfolgt mittels zweier Wälzlager, bevorzugt mittels zweier Schrägschulter-Kugellager 32, 34, die in O-Anordnung (vergleiche eingezeichnete, strichpunktierte Wirkungslinien) eingesetzt sind.

Dabei sind die radial innenliegenden Lagerringe der Kugellager 32, 34 an den Lageraufnahmen 30a des Getriebegehäuses radial und axial abgestützt.

Der radial äußere Lagerring des Kugellagers 32 ist in eine Ringschulter 26b des Deckels 26 eingesetzt und bildet sowohl eine axial als auch radial wirkende Drehlagerung des Ausgleichsgehäuses 14.

Der radial äußere Lagerring des im Durchmesser größeren Kugellagers 34 ist unmittelbar in den im Durchmesser größeren Abschnitt 12c des Tellerrads 12 eingesetzt und liegt zudem an der Stirnseite des Abschnitts 24 des Ausgleichsgehäuses 14 und an der zur Stirnseite offenen Ringnut 24b bzw. an dem Sicherungsring 28 an. Die dadurch bewirkte sehr präzise und biegesteife Drehlagerung stellt einen laufruhigen Betrieb der Hypoidverzahnung sicher. Die Fig. 4 zeigt ein zu den Fig. 1 bis 3 alternatives Ausführungsbeispiel des Differenzialgetriebes 10', bei dem die Planetenräder 36 und die Abtriebsräder 38 auf den Achshalbwellen 40 in an sich bekannter Weise als Kegelräder ausgeführt sind. Es versteht sich, dass das Ausgleichsgehäuse 14' hinsichtlich der inneren axialen und radialen Führung der Zahnräder und des größeren axialen Bauraums entsprechend anzupassen ist.

Im Übrigen wird zur Vermeidung von Wiederholungen auf die zu den Fig. 1 bis 3 beschriebenen Merkmale verwiesen, die in der Fig. 4 funktionell gleich ausgebildet sein können. Anstelle eines kreuzförmigen Mitnehmerbolzens 16 kann auch ein einfacher Mitnehmerbolzen 16' mit nur zwei Planetenrädern 18 eingesetzt sein.

## Patentansprüche

1. Differenzialgetriebe (10), insbesondere für ein Kraftfahrzeug, mit einem von einem Ritzel angetriebenen, ringförmigen Zahnrad (12), das auf einem in einem Getriebegehäuse (30) über beidseitige Wälzlager (32, 34) drehbar gelagerten Ausgleichsgehäuse (14) angeordnet ist, wobei in dem Ausgleichsgehäuse (14) auf zumindest einem Mitnehmerbolzen (16) Planetenräder (18) gelagert sind, die mit achsparallelen Abtriebsrädern (20) auf Abtriebshalbwellen (22) kämmen, wobei das Zahnrad (12) auf das Ausgleichsgehäuse (14) ohne Formschluss in Umfangsrichtung aufgesteckt ist und Ausnehmungen (12f) aufweist, in die der zumindest eine Mitnehmerbolzen (16) in Umfangsrichtung formschlüssig einragt, wobei das Ausgleichsgehäuse (14) zweiteilig mit einem tassenförmigen Abschnitt (24) und einem Deckel (26) ausgebildet ist, **dadurch gekennzeichnet, dass** der tassenförmige Abschnitt (24) und der Deckel (26) des Ausgleichsgehäuses (14) in axialer und radialer Richtung ohne Befestigungsmittel durch die beidseitigen Wälzlager (32, 34) gehalten sind und dass das Zahnrad (12) mit einem ringförmigen Fortsatz (12b) unmittelbar an einem der beidseitigen Wälzlager (34) gegenüber dem Getriebegehäuse (30) abgestützt ist.

2. Differenzialgetriebe (10) nach Anspruch 1, **dadurch gekennzeichnet, dass** das Zahnrad (12) mittels eines Sicherungsrings (28) auf dem Außenumfang des Ausgleichsgehäuses (14) axial gehalten ist.

3. Differenzialgetriebe (10) nach Anspruch 1 oder 2, **dadurch gekennzeichnet, dass** das Ausgleichsgehäuse (14) als dünnwandiges Bauteil aus Stahl oder Leichtmetall hergestellt ist.

4. Differenzialgetriebe (10) nach einem der vorhergehenden Ansprüche, **dadurch gekennzeichnet, dass** in dem tassenförmigen Abschnitt (24) zum Deckel (26) hin offene Schlitze (24b) zur Aufnahme des zumindest einem Mitnehmerbolzens (16) eingearbeitet sind.

5. Differenzialgetriebe (10) nach einem der vorhergehenden Ansprüche, **dadurch gekennzeichnet, dass** der Deckel (26) eine radial außenliegende Ringnut (26a) aufweist, in die stirnseitig die Umfangswand des tassenförmigen Abschnitts (24) einragt.

6. Differenzialgetriebe (10) nach Anspruch 4, **dadurch gekennzeichnet, dass** in das Ausgleichsgehäuse (14) ein kreuzförmiger Mitnehmerbolzen (16) über vier zum Deckel (26) offene Schlitze (24b) eingesetzt ist, der vier mit den Abtriebsrädern (20) kämmende Planetenräder (18) trägt und der in korrespondierende vier Ausnehmungen (12f) des Tellerrads (12) einragt.

7. Differenzialgetriebe (10) nach einem der vorhergehenden Ansprüche, **dadurch gekennzeichnet, dass** die Planetenräder Kegelräder (36) sind, die mit den kegelförmig ausgeführten Abtriebsrädern (38) kämmen.

8. Differenzialgetriebe (10) nach einem der vorhergehenden Ansprüche 1 bis 7, **dadurch gekennzeichnet, dass** die Abtriebsräder (20) auf den Abtriebhalbwellen (22) als Kronenräder ausgeführt sind, die mit einfachen Stirnzahnrädern als Planetenräder (18) kämmen.

9. Differenzialgetriebe (10) nach einem der vorhergehenden Ansprüche, **dadurch gekennzeichnet, dass** das Zahnrad ein mit einem kegelförmigen Antriebsritzel zusammenwirkendes Tellerrad (12) ist und dass der ringförmige Fortsatz (12b) auf der der Verzahnung (12a) des Tellerrads (12) gegenüberliegenden Seite vorgesehen ist.

10. Differenzialgetriebe (10) nach einem der vorhergehenden Ansprüche, **dadurch gekennzeichnet, dass** die beidseitigen Wälzlager Schrägschulter-Kugellager (32, 34) sind.

11. Differenzialgetriebe (10) nach einem der vorhergehenden Ansprüche, **dadurch gekennzeichnet, dass** die Wälzlager (32, 34) in O-Anordnung ausgerichtet sind.

## Claims

1. Differential gear (10), in particular for a motor vehicle, having a pinion-driven, ring-shaped gear wheel (12) arranged on a differential housing (14) that is rotatably mounted in a gearing housing (30) by means of rolling bearings (32, 34) on both sides, wherein, in the differential housing (14), planetary gears (18) are mounted on at least one driving pin (16), said planetary gears meshing with axially parallel output gears (20) on output half-shafts (22), wherein the gear wheel (12) is fitted on the differential housing (14) in a peripheral direction without an interlocking connection and said gear wheel has recesses (12f) into which the at least one driving pin (16) projects in a peripheral direction in an interlocking manner, wherein the differential housing (14) is formed in two parts with a cup-shaped section (24) and a cover (26), **characterised in that** the cup-shaped section (24) and the cover (26) of the differential housing (14) are held in the axial and radial direction without fastening means by the rolling bearings (32, 34) on both sides, and **in that** the gear wheel (12) is supported opposite the gearing housing (30) with a ring-shaped extension (12b) directly on one of the rolling bearings (34) on both sides.

2. Differential gear (10) according to claim 1, **characterised in that** the gear wheel (12) is held axially on the outer circumference of the differential housing (14) by means of a retaining ring (28).

3. Differential gear (10) according to claim 1 or 2, **characterised in that** the differential housing (14) is made as a thin-walled component made of steel or light metal.

4. Differential gear (10) according to any one of the preceding claims, **characterised in that** slots (24b) open towards the cover (26) are incorporated in the cup-shaped section (24) for receiving the at least one driving pin (16).

5. Differential gear (10) according to any one of the preceding claims, **characterised in that** the cover (26) has a radially outer annular groove (26a) into which the peripheral wall of the cup-shaped section (24) protrudes at the end face.

6. Differential gear (10) according to claim 4, **characterised in that** a cross-shaped driving pin (16) is inserted into the differential housing (14) via four slots (24b) open towards the cover (26), said driving pin having four planetary gears (18) meshing with the output gears (20) and protruding into four corresponding recesses (12f) of the ring gear (12).

7. Differential gear (10) according to any one of the preceding claims, **characterised in that** the planetary gears are bevel gears (36) which mesh with the conical output gears (38).

8. Differential gear (10) according to any one of the preceding claims 1 to 7, **characterised in that** the output gears (20) on the output half-shafts (22) are designed as crown gears which mesh with simple spur gears as planetary gears (18).

9. Differential gear (10) according to any one of the preceding claims, **characterised in that** the gear wheel is a ring gear (12) which interacts with a conical drive pinion and **in that** the ring-shaped extension (12b) is provided on the side opposite the toothing (12a) of the ring gear (12).

10. Differential gear (10) according to any one of the preceding claims, **characterised in that** the rolling bearings on both sides are inclined shoulder ball bearings (32, 34).

11. Differential gear (10) according to any one of the preceding claims, **characterised in that** the rolling bearings (32, 34) are aligned in an O arrangement.

## Revendications

1. Transmission différentielle (10), en particulier pour un véhicule automobile, avec une roue dentée (12) annulaire, entraînée par un pignon qui est agencée sur un carter de compensation (14) logé de manière à pouvoir tourner dans un carter de transmission (30) par le biais des paliers de roulement (32, 34) bilatéraux, dans lequel des roues planétaires (18) sont logées dans le carter de compensation (14) sur au moins un boulon d'entraînement (16) qui s'engrènent avec des roues de sortie (20) parallèles à l'axe sur des demi-arbres de sortie (22), dans laquelle la roue dentée (12) est enfichée sur le carter de compensation (14) sans complémentarité de formes dans le sens périphérique et présente des évidements (12f) dans lesquels l'au moins un boulon d'entraînement (16) pénètre à complémentarité de formes dans le sens périphérique, dans laquelle le carter de compensation (14) est réalisé en deux parties avec une section en forme de tasse et un couvercle (26), **caractérisée en ce que** la section en forme de tasse (24) et le couvercle (26) du carter de compensation (14) sont maintenus dans le sens axial et radial sans moyen de fixation par les paliers de roulement (32, 34) bilatéraux et que la roue dentée (12) est en appui avec un prolongement (12b) annulaire directement contre un des paliers de roulement (34) bilatéraux par rapport au carter de transmission (30).

2. Transmission différentielle (10) selon la revendication 1, **caractérisée en ce que** la roue dentée (12) est maintenue axialement au moyen d'une bague de verrouillage (28) sur la périphérie extérieure du carter de compensation (14).

3. Transmission différentielle (10) selon la revendication 1 ou 2, **caractérisée en ce que** le carter de compensation (14) est fabriqué comme composant à paroi mince en acier ou métal léger.

4. Transmission différentielle (10) selon l'une des revendications précédentes, **caractérisée en ce que** des fentes (24b) ouvertes vers le couvercle (26) sont réalisées dans la section en forme de tasse (24) pour la réception de l'au moins un boulon d'entraînement (16).

5. Transmission différentielle (10) selon l'une des revendications précédentes, **caractérisée en ce que** le couvercle (26) présente une rainure annulaire (26a) extérieure radialement, dans laquelle la paroi périphérique de la section en forme de tasse (24) pénètre côté avant.

6. Transmission différentielle (10) selon la revendication 4, **caractérisée en ce qu'**un boulon d'entraînement en forme de croix (16) est inséré dans le carter de compensation (14) par le biais de quatre fentes (24b) ouvertes vers le couvercle (26) qui porte quatre roues planétaires (18) s'engrenant avec les roues de sortie (20) et qui pénètre dans quatre évidements (12f) correspondants de la couronne de différentiel (12).

7. Transmission différentielle (10) selon l'une des revendications précédentes, **caractérisée en ce que** les roues planétaires sont des roues coniques (36) qui s'engrènent avec les roues de sortie (38) réalisées en forme de cône.

8. Transmission différentielle (10) selon l'une des revendications précédentes 1 à 7, **caractérisée en ce que** les roues de sortie (20) sont réalisées sur les demi-arbres de sortie (22) comme des couronnes dentées qui s'engrènent avec de simples roues dentées avant comme roues planétaires (18).

9. Transmission différentielle (10) selon l'une des revendications précédentes, **caractérisée en ce que** la roue dentée est une couronne de différentiel (12) coagissant avec un pignon d'entraînement conique et que le prolongement annulaire (12b) est prévu sur le côté opposé à la denture (12a) de la couronne de différentiel (12).

10. Transmission différentielle (10) selon l'une des revendications précédentes, **caractérisée en ce que** les paliers de roulement bilatéraux sont des roulements à billes à bord oblique (32, 34).

11. Transmission différentielle (10) selon l'une des revendications précédentes, **caractérisée en ce que** les paliers de roulement (32, 34) sont orientés en agencement O.
